# EUROPEAN PATENT APPLICATION

(11) **EP 4 693 477 A1**
(43) Date of publication of application: **11.02.2026**
(21) Application number: 24919170.1
(22) Date of filing: 04.12.2024
(51) Int. Cl.: H01M 4/36

(54) **POSITIVE ELECTRODE ACTIVE MATERIAL, ELECTRICALLY CONDUCTIVE SLURRY AND SECONDARY BATTERY**

(30) Priority: 05.06.2024 CN 202410726252
(71) Applicant: Eve Power Co., Ltd., Jingmen, Hubei 448000 (CN)
(72) Inventor: CHEN, Meng, Jingmen, Hubei 448000 (CN); WEN, Shengyao, Jingmen, Hubei 448000 (CN); WU, Tingting, Jingmen, Hubei 448000 (CN); GAO, Jianhang, Jingmen, Hubei 448000 (CN); ZHAO, Yiwen, Jingmen, Hubei 448000 (CN); ZHANG, Huan, Jingmen, Hubei 448000 (CN); LIU, Fanfen, Jingmen, Hubei 448000 (CN)
(74) Representative: Berggren Oy
(86) International application number: PCT/CN2024/136718
(87) International publication number: WO 2025/251564

(57) **Abstract**

The present disclosure provides a positive electrode active material, a conductive slurry and a secondary battery, and relates to the technical field of the secondary battery. The present disclosure improves the cycle performance and the stabilizing performance of a secondary battery having the positive electrode active material by adding the lithium-rich manganese-based material particles in the lithium iron manganese phosphate particles and controlling the proportion of Li₂MnO₃ phase in the lithium-rich manganese-based material to be less than 0.5.

## Description

The present application claims a priority of Chinese patent application No. 202410726252.6, filed with Chinese Patent Office on June 5, 2024, the entire disclosures of the above application are incorporated herein by reference.

### TECHNICAL FIELD

The present disclosure relates to a technical field of a secondary battery, and in particular to a positive electrode active material, a conductive slurry and a secondary battery.

### BACKGROUND

A positive electrode material has an important influence on the performance of a lithium-ion battery and is an important constraint to improve battery performance. Lithium manganese iron phosphate (LMFP) is a new generation of lithium ion battery positive material, which has an olivine structure, a high operating voltage, a high energy density and good safety. However, due to the reasons such as the dissolution of iron and Mn and the immaturity of the material synthesis process, a cycle performance of the material is average, which limits a current application scenario of the material.

### SUMMARY

In the related technology, in order to improve a cycle performance of a LMFP material, the current mainstream method is to add lithium-rich lithium ferrite (LFO), which may thus improve the cycle performance of the LMFP material. However, the improvement is not large. According to experience, adding more than 2% or more of LFO material can effectively improve the cycle performance of the LMFP material. However, after adding 2% or more of LFO, the battery produces serious gas and serious gas spots appear at an interface of a negative electrode sheet, resulting in the cycle improvement effect that is less than expected.

The present disclosure provides a positive electrode active material, a conductive slurry and a secondary battery, which can improve the cycle performance of the battery, and the battery has a good safety performance.

In a first aspect, an embodiment of the present disclosure provides a positive electrode active material, comprising lithium iron manganese phosphate particles and lithium-rich manganese-based material particles. The chemical formula of the lithium-rich manganese-based material particles is yLi₂MnO₃ ·(1-y) LiMO₂, in which 0 < y <0.5, and M is at least one of Ni, Co, or Mn.

The second aspect of the present application provides a conductive slurry, including a conductive agent, a binder, a dispersant and the positive electrode active material.

The third aspect of the present application provides a secondary battery, which includes a negative electrode, a separator film, an electrolyte and a positive electrode. The positive electrode includes a current collector and a coating layer disposed on at least one side of the current collector, and the coating layer includes the positive electrode active material or the conductive paste.

### Beneficial Effect

In the embodiment of the present disclosure, by adding the lithium-rich manganese-based material particle into the lithium iron manganese phosphate particles and limiting the proportion of Li₂MnO₃ phase in the lithium-rich manganese-based material to be less than 0.5, the cycle performance and the stabilizing performance of the secondary battery having the positive electrode active material are thus improved.

### DESCRIPTION OF THE EMBODIMENTS

The first aspect of the present application provides a positive electrode active material, which includes uniformly distributed lithium iron manganese phosphate particles and lithium-rich manganese-based material particles, in which the mass percentage of the lithium-rich manganese-based material particles relative to the positive electrode active material is 1% to 50%; the chemical formula of the lithium-rich manganese-based material particles is yLi₂MnO₃ ·(1-y)LiMO₂, in which 0< y <0.5, and M is at least one of Ni, Co, or Mn. It should be noted that the manner in which the lithium iron manganese phosphate particles and the lithium-rich manganese-based material particle are mixed in the present application is not limited. Exemplarily, the lithium iron manganese phosphate particles and the lithium-rich manganese-based material particles are uniformly mixed by the ball milling process.

It is understandable that the positive electrode active material is used to provide an active lithium ion for a lithium-ion battery, and the active lithium ion migrates between the positive electrode and the negative electrode of the battery, thereby realizing the charge and discharge of the battery. Lithium manganese iron phosphate is a new generation of lithium battery positive electrode material. It has a larger operating voltage, can greatly improve the battery energy density, and has high safety, but it has the problem of unsatisfactory cycle performance. In the related technology, in order to improve a cycle performance of a LMFP material, the current mainstream method is to add lithium-rich lithium ferrite (LFO), which may thus improve the cycle performance of the LMFP material. However, the improvement is not large. According to experience, adding 2% or more of LFO material can effectively improve the cycle performance of the LMFP material. However, after adding 2% or more of LFO, the battery produces serious gas and serious gas spots appear at an interface of a negative electrode sheet, resulting in the cycle improvement effect that is less than expected.

In view of the problem existing in the prior art, the inventor creatively discovered that adding a lithium-rich manganese-based material particle to the lithium iron manganese phosphate particles and limiting the proportion of Li₂MnO₃ phase in the lithium-rich manganese-based material to less than 0.5 can improve the cycle performance and stabilizing performance of the secondary battery having the positive electrode active material. It should be noted that the inventor also found through experimentation that the proportion of Li₂MnO₃ in the lithium-rich manganese -based material is one of the key factors affecting the cycle performance and stabilizing performance of the secondary battery. When the proportion of Li₂MnO₃ phase in the lithium-rich manganese-based material is greater than 0.5, the positive electrode active material will undergo a serious phase change in the later stage of the cycle, and the cycle performance will decrease instead; when the proportion of Li₂MnO₃ phase in the lithium-rich manganese-based material is less than 0.5, the structure of the lithium-rich manganese-based material is more stable during the cycle process, so that the secondary battery has better cycle performance and stabilizing performance. Specifically, 0< y ≤ 0.3; or, 0.2 ≤ y ≤ 0.4; or, 0.3< y ≤ 0.5.

In some embodiments of the present application, the mass percentage of the lithium-rich manganese-based material particle in the positive electrode active material is 1%~50%, that is, the mass percentage of the lithium-rich manganese-based material particles relative to the positive electrode active material is 1%~50%. For example, the mass percentage of the lithium-rich manganese-based material particles relative to the positive electrode active material is 1%~15%. For another example, the mass percentage of the lithium-rich manganese-based material particles relative to the positive electrode active material is 15%~30%. For another example, the mass percentage of the lithium-rich manganese-based material particles relative to the positive electrode active material is 30%~50%.

It is understandable that increasing the mass percentage of the lithium-rich manganese-based material particle relative to the positive electrode active material can increase the compaction density of the positive electrode material, which is beneficial to provide the volume energy density of the battery. Exemplarily, the mass percentage of the lithium-rich manganese-based material particle relative to the positive electrode active material is 1% to 15%, and the mass percentage of the lithium-rich manganese-based material particle relative to the positive electrode active material may be, but is not limited to, 1%, 2%, 3%, 4%, 5%, 6%, 7%, 8%, 9%, 10%, 11%, 12%, 13%, 14%, 15%.

In other embodiments of the present application, the mass percentage of the lithium-rich manganese-based material particles relative to the positive electrode active material is 15%~30%, and the mass percentage of the lithium-rich manganese-based material particles relative to the positive electrode active material may be, but is not limited to 16%, 17%, 18%, 19%, 20%, 21%, 22%, 23%, 24%, 15%, 26%, 27%, 28%, 29%, 30%.

In other embodiments of the present application, the mass percentage of the lithium-rich manganese-based material particles relative to the positive electrode active material is 30%~50%, and the mass percentage of the lithium-rich manganese-based material particles relative to the positive electrode active material may be, but is not limited to 31%, 32%, 33 %, 34%, 35 %, 36%, 37 %, 38 %, 39 %, 40 %, 41 %, 42%, 43%, 44%, 45%, 46%, 47%, 48%, 49%, 50%.

In some other embodiments of the present application, the mass percentage of the lithium-rich manganese-based material particles in the positive electrode active material is 30%~40% or 35%~45% or 40%~50%.

In other embodiments of the present application, the particle size of the lithium iron manganese phosphate particles is smaller than the particle size of the lithium-rich manganese-based material particles. This structural setting is conducive to further improving the compaction density of the positive electrode material. Exemplarily, the ratio of D50 of the lithium iron manganese phosphate particles to D50 of the lithium-rich manganese-based material particles is 0.05~0.25. It may be understood that controlling the ratio of D50 of the lithium iron manganese phosphate particles to D50 of the lithium-rich manganese-based material particle can achieve good grading of particles of different particle sizes, so that the lithium iron manganese phosphate particles and the lithium-rich manganese-based particles can be better stacked together, the gaps between the particles are more uniform, and the cycle performance is the best. Specifically, the ratio of D50 of the lithium iron manganese phosphate particles to D50 of the lithium-rich manganese-based material particles may be, but is not limited to, 0.05, 0.06, 0.07, 0.08, 0.09, 0.1, 0.11, 0.12, 0.13, 0.14, 0.15, 0.16, 0.17, 0.18, 0.19, 0.20, 0.21, 0.22, 0.23, 0.24, and 0.25.

Specifically, D50 of the lithium iron manganese phosphate particles is 0.4 µm~1.2 µm. It is understandable that if the particle size of lithium iron manganese phosphate is too small, for example, less than 0.4 µm, it will cause problems in the slurry coating process and cracks in the coated pole piece; if the particle size of lithium iron manganese phosphate is too large, for example, greater than 1.2 µm, it will not form the optimal stacking effect with the lithium-rich manganese-based particles, which will easily lead to unsatisfactory battery performance.

Specifically, the specific surface area of the lithium iron manganese phosphate particles is 16 m²/g to 26 m²/g. It is understandable that if the specific surface area of the lithium iron manganese phosphate particles is too small, for example, less than 16 m²/ g, it cannot form the optimal stacking effect with the lithium-rich manganese-based particles, affecting the gram capacity; if the specific surface area is too large, the slurry stability becomes poor, while the problems such as cracking of the pole piece occur during the coating process.

Specifically, D50 of the lithium-rich manganese-based material particles is 4 µm ~ 10 µm. It is understandable that if the particle size of the lithium-rich manganese-based particles is too small, such as less than 4 µm, it will cause problems in the slurry coating process and cracks in the coated pole pieces; if the particle size of the lithium-rich manganese-based particles is too large, such as greater than 10 µm, it will not form the optimal stacking effect with the lithium iron manganese phosphate particles, which will easily lead to unsatisfactory battery performance.

Specifically, the specific surface area of the lithium-rich manganese-based material particles is 0.3 m²/g ~ 2 m²/g. It is understandable that if the specific surface area of the lithium-rich manganese-based material particles is too small, for example, less than 0.3 m²/g, it cannot form the optimal stacking effect with the lithium iron manganese phosphate particles, affecting the gram capacity; if the specific surface area of the lithium-rich manganese-based material particles is too large, for example, greater than 2 m²/g, the slurry stability becomes poor, while the problems such as cracking of the pole piece occur during the coating process.

In some embodiments of the present application, the positive electrode active material is consisted of the lithium iron manganese phosphate particles and the lithium-rich manganese-based material particles, that is, the positive electrode active material only includes the lithium iron manganese phosphate particles and the lithium-rich manganese-based material particles. This embodiment increases the content of a lithium iron manganese phosphate particles in the positive electrode active material. The high content of the lithium iron manganese phosphate particles can ensure that the positive electrode material has a higher operating voltage and safety performance. In addition, the positive electrode active material only includes two components, which is conducive to simplifying the process flow and improving the preparation efficiency.

In some embodiments of the present application, the lithium manganese iron phosphate material includes one or more materials with a chemical formula of Li ₐ M _{b} (PO₄)_{c} , where M is Fe_{1-x-z} Mnₓ D_{z}. Where a, b and c represent the molar amounts of Li, M and PO₄ in the material respectively, and 1-x-z, x, z represent the molar amounts of Fe, Mn and metal element D in M respectively. In the lithium manganese iron phosphate material: the ratio a/c of the molar amount a of Li to the molar amount c of P is 0.95~1.15, for example, it may be 0.95, 0.96, 0.97, 0.98, 0.99, 1.00, 1.01, 1.02, 1.03, 1.04, 1.05, 1.06, 1.07, 1.08, 1.09, 1.10, 1.11, 1.12 , 1.13 , 1.14 , 1.15 and the value between any two of the above values; the ratio b/c of the molar amount b of M to the molar amount c of P is 0.90~1.15, for example, it may be 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08 , 1.09, 1.10, 1.11, 1.12, 1.13, 1.14, 1.15 and the value between any two of the above values; the ratio a/b of the molar amount a of Li to the molar amount b of M is 1.01~1.10, for example, it may be 1.01, 1.02, 1.03, 1.04, 1.05, 1.06, 1.07, 1.08, 1.09, 1.10 and the value between any two of the above values. In some embodiments of the present application, in M, D is selected from one or more of Mg, Ti, V, Ni, Co, Al, Nb, Y, Mo, Sr, La, and Zr. The lithium manganese iron phosphate may be prepared by referring to the preparation method of lithium manganese iron phosphate in the art. Specifically, the corresponding ion source (lithium source, iron source, manganese source, D source, phosphorus source) may be weighed according to the molar ratio of each element, and it may be obtained by mixing and calcination.

It is understandable that the molar ratio of the different elements in the lithium iron manganese phosphate material has a significant effect on the morphology of the primary particle, the particle size and the electrochemical properties of the material. If the molar amount of the Li element is too low, the gram capacity of the material decreases significantly; if the molar amount of the Li element is too high, the sintering and fusion between the particles is inhibited, resulting in excessive refinement of the material and affecting the processing performance. In addition, the appropriate element doping may improve the electronic conductivity and ion diffusion rate of the lithium iron manganese phosphate material. This embodiment sets a/c (i.e., Li/P) to 0.95~1.10, b/c (i.e., M/P) to 0.90~1.15, a/b (i.e., Li/M) = 1.01~1.10 and the element doping may improve the conductivity of lithium iron phosphate.

The second aspect of the present application provides a conductive paste, including a conductive agent, a binder, a dispersant, and the positive electrode active material. Exemplarily, in the conductive paste, the positive electrode active material: the conductive agent: the binder: the dispersant is (96.7%~97.1%): (0.7%~1.1%): (1.8%~2.2%): (0.1%~0.3%) as calculated by mass percentage.

Among them, the positive electrode active material is used to provide active lithium ions for the lithium-ion battery. It is understandable that if the proportion of active materials is too low, for example, less than 96.7, the overall energy density of the battery is low, affecting the actual application effect; if the proportion of the active material is too high, for example, greater than 97.1%, the proportion of other components is reduced, affecting the processing performance and the battery rate performance.

Among them, the conductive agent is mainly used to provide conductivity for the positive electrode and can improve the conductivity of the positive electrode.

The conductive agent is a conductive material known in the art that may be used for the positive electrode active material layer. The conductive agent may be selected from any conductive material as long as it does not cause chemical changes. Exemplarily, the conductive agent is selected from one or more of a carbon nanotube, carbon black and graphene.

Among them, the binder is mainly used to firmly bond the positive electrode active material, the conductive agent and the conductive substrate (such as the current collector). The material of the binder is not limited, and the binder is selected from one or more of polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyolefin, sodium carboxymethyl cellulose (CMC) and sodium alginate.

Among them, the dispersant is used to control the viscosity change of the positive electrode slurry. Exemplarily, the dispersant is selected from one or more of polyvinyl pyrrolidone, polyethylene glycol, polyvinyl alcohol, and a polyester-based substance. It is understandable that if the proportion of the lithium-rich manganese-based material in the positive electrode slurry is too high, the viscosity of the slurry will rise too quickly, which is inconvenient to use. The present application controls the viscosity change of the slurry by adding a dispersant, thereby avoiding the problem in which the viscosity of the slurry rises too quickly.

Of course, in some other embodiments of the present application, the conductive paste may not include a dispersant, either. Exemplarily, the conductive paste includes a conductive agent, a binder and the positive electrode active material; as calculated by mass percentage, the positive electrode active material: the conductive agent: the binder is (96.7%~97.1%): (0.7%~1.1%): (1.8%~2.2%).

It is understood that the positive electrode plate includes a current collector and a coating layer (also called a positive electrode material layer) disposed on at least one surface of the current collector. The positive electrode material layer includes the conductive agent, the adhesive, the dispersant, and the positive electrode active material. In some embodiments, the material of the positive electrode current collector may be any common conductive metal material in the art, including but not limited to an aluminum foil, a platinum foil, or a palladium foil, and the present application does not limit thereto.

Specifically, the preparation of the positive electrode material layer in the present application may be that the positive electrode material of the battery, the conductive agent, the binder, the dispersant and the solvent are mixed to form the positive electrode slurry, and then the positive electrode slurry is coated and dried to obtain the positive electrode material layer. When preparing the positive electrode slurry, the binder and the solvent may be mixed firstly, and then the conductive agent and the dispersant are added after sufficient stirring, and then the positive electrode material of the battery is added after stirring, and the positive electrode slurry is obtained by sieving after stirring. It should be noted that the preparation process of the positive electrode slurry and the positive electrode material layer does not belong to the main improvement of the present application and is not limited here.

In some embodiments of the present application, the compaction density of the conductive paste is 2.1 g/cm³ ~2.8 g/cm³.

In a third aspect, an embodiment of the present disclosure provides a secondary battery, the secondary battery including a negative electrode, a separator, an electrolyte and a positive electrode, the positive electrode includes a current collector and a coating layer disposed on at least one side of the current collector. It should be noted that the secondary battery includes but is not limited to a button battery, a soft pack battery, a square lithium-ion battery, a cylindrical lithium-ion battery, etc. The secondary battery includes the positive electrode active material or the conductive slurry as described in any of the above embodiments.

In the present application, the negative electrode of the secondary battery may be any negative electrode known in the art. In the embodiment of the present application, the negative electrode may include one or more of a carbon-based negative electrode, a silicon-based negative electrode, a tin-based negative electrode and a lithium negative electrode. Among them, the carbon-based negative electrode may include graphite, hard carbon, soft carbon, graphene, etc.; the silicon-based negative electrode may include silicon-containing materials such as silicon, silicon-carbon, silicon-oxygen, silicon-metal compounds, or a mixture of the silicon-containing material and a non-silicon-containing material such as graphite; the tin-based negative electrode may include tin, tin-carbon, tin-oxygen, tin-metal compounds, or a mixture of a tin-containing material and a non-tin-containing material such as graphite; the lithium negative electrode may include metallic lithium or a lithium alloy. The lithium alloy may specifically be at least one of a lithium-silicon alloy, a lithium-sodium alloy, a lithium-potassium alloy, a lithium-aluminum alloy, a lithium-tin alloy and a lithium-indium alloy. In some embodiments of the present application, the current collector of the negative electrode is a copper foil, and the negative electrode active material includes one or more of natural graphite, artificial graphite, hard carbon, soft carbon, lithium titanate, iron oxide, lithium titanium phosphate, titanium dioxide, silicon, silicon oxide , tin and oxide thereof, and antimony and oxide thereof; the binder includes one or more of polyacrylic acid (PAA), polyvinylidene fluoride (PVDF), carboxymethyl cellulose (CMC) and styrene butadiene latex (SBR); the conductive agent includes one or more of acetylene black, ketjen black, Super-P, a carbon nanotube, a carbon nanofiber, activated carbon and graphene. In the present application, the preparation method of the negative electrode can adopt any method known in the art.

In the present application, the separator of the secondary battery may be any separator known to those skilled in the art; for example, the separator may be one or more of polyolefin microporous membrane, polyethylene terephthalate, polyethylene felt, glass fiber felt or ultrafine glass fiber paper.

In the present application, the electrolyte of the secondary battery includes a solution formed by an electrolyte lithium salt in a non-aqueous solvent. In an embodiment of the present application, the electrolyte lithium salt includes lithium hexafluorophosphate (LiPF₆), lithium perchlorate (LiClO₄), lithium tetrafluoroborate (LiBF₄), lithium hexafluoroarsenate (LiAsF₆), lithium hexafluorosilicate (Li₂SiF₆), lithium tetraphenylborate (LiB (C₆H₅)₄), lithium chloride (LiCl), lithium bromide (LiBr), lithium chloroaluminate (LiAlCl₄), lithium fluorocarbon sulfonate (LiC(SO₂CF₃)₃), LiCH₃SO₃, LiN(SO₂CF₃)₂ and LiN(SO₂C₂F₅)₂. In some embodiments of the present application, the non-aqueous solvent includes one or more of a chain acid ester and a cyclic acid ester. In some embodiments of the present application, the chain acid ester includes one or more of dimethyl carbonate (DMC), diethyl carbonate (DEC), ethyl methyl carbonate (EMC), methyl propyl carbonate (MPC) and dipropyl carbonate (DPC). In some embodiments of the present application, the chain acid ester includes chain organic ester containing fluorine, sulfur or an unsaturated bond. In some embodiments of the present application, the cyclic acid ester includes one or more of ethylene carbonate (EC), propylene carbonate (PC), vinylene carbonate (VC), γ-butyrolactone (γ-BL) and sultone. In some embodiments of the present application, the cyclic acid ester includes cyclic organic esters containing fluorine, sulfur or unsaturated bonds. In some embodiments of the present application, the non-aqueous solvent includes one or more of chain ether and cyclic ether solution. In some embodiments of the present application, the cyclic ether includes one or more of tetrahydrofuran (THF), 2-methyltetrahydrofuran (2-MeTHF), 1,3-dioxolane (DOL) and 4-methyl-1,3-dioxolane (4-MeDOL). In some embodiments of the present application, the cyclic ether includes a cyclic organic ether containing fluorine, sulfur or an unsaturated bond. In some embodiments of the present application, the chain ether includes one or more of dimethoxymethane (DMM), 1,2-dimethoxyethane (DME), 1,2-dimethoxypropane (DMP) and diethylene glycol dimethyl ether (DG). In some embodiments of the present application, the chain ether includes a chain organic ether containing fluorine, sulfur or an unsaturated bond. In an embodiment of the present application, the concentration of the electrolyte lithium salt in the electrolyte is 0.1mol/L -15mol/L. In some embodiments of the present application, the concentration of the electrolyte lithium salt is 1mol/L -10mol/L.

The technical solution and technical effects of the present application are described in detail below through specific embodiments. The following embodiments are only some embodiments of the present application and do not specifically limit the present application.

### Example 1

The lithium iron manganese phosphate material and the lithium-rich manganese-based material are added into a mixer for mixing, where the chemical formula of lithium iron manganese phosphate is Li _{1.05} Mn _{0.6} Fe _{0.4} PO₄, D50 is 0.8 µm, and the specific surface area is 2.1 m²/g; the chemical formula of lithium-rich manganese-based material is 0.3Li₂MnO ₃ ·0.7LiNi_{0.5} Mn_{0.5}O₂, D50 of the material is 7 µm, and the specific surface area is 1 m ² /g. The mass percentage of the lithium- rich manganese-based material particles relative to the positive electrode active material is 10%, and the mixture is mechanically mixed at a speed of 3.5 rpm for 6 hours to obtain the positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was carbon nanotubes, the binder was polyvinylidene fluoride, the dispersant was polyvinyl pyrrolidone, and the solid content of the slurry was 60%. The slurry was coated on the surface of carbon-coated aluminum foil, and dried and pressed to obtain a positive electrode sheet with a compaction density of 2.3 g/cm³ and the obtained positive electrode sheet was combined with a separator and a negative electrode sheet to obtain a battery cell, and the battery cell was packaged, injected, and divided into different volumes to obtain a battery.

### Example 2

The lithium manganese iron phosphate material and the lithium-rich manganese-based material are added into a mixer for mixing, where the chemical formula of lithium manganese iron phosphate is Li_{1.05} Mn_{0.6}Fe_{0.4}PO₄, D50 is 0.8 µm, and the specific surface area is 21 m²/g; the chemical formula of the lithium-rich manganese-based material is 0.3Li₂ MnO₃ ·0.7LiNi_{0.5}M n_{0.5}O₂, D 50 of the material is 7 µm, and the specific surface area is 1 m²/g. The mass percentage of the lithium-rich manganese-based material particle relative to the positive electrode active material is 20%, and the mixture is mechanically mixed at a speed of 3.5 rpm for 6 hours to obtain a positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was carbon nanotubes, the binder was polyvinylidene fluoride, the dispersant was polyvinyl pyrrolidone, and the solid content of the slurry was 60%. The slurry was coated on the surface of carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 3

The lithium manganese iron phosphate material and the lithium-rich manganese-based material are added into a mixer for mixing, where the chemical formula of lithium manganese iron phosphate is Li_{1.05} Mn_{0.6} Fe_{0.4}PO₄, D50 is 0.8 µm, and the specific surface area is 21 m²/g; the chemical formula of the lithium-rich manganese-based material is 0.3Li₂ MnO₃ ·0.7LiNi _{0.5} Mn_{0.5}O₂, D50 of the material is 7 µm, and the specific surface area is 1 m²/g. The mass percentage of the lithium-rich manganese-based material particle relative to the positive electrode active material is 30%, and the mixture is mechanically mixed at a speed of 3.5 rpm for 6 hours to obtain the positive electrode active material of the battery.

The positive electrode active material of the battery, the conductive agent, the binder and the dispersant were dispersed in N-methylpyrrolidone at a mass ratio of 96.9:0.9:2.0:0.2 to prepare a slurry, where the conductive agent was a carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 4

The lithium manganese iron phosphate material and the lithium-rich manganese-based material are added into a mixer for mixing, wherein the chemical formula of lithium manganese iron phosphate is Li_{1.05} Mn_{0.6}Fe_{0.4} PO₄, D50 is 0.8 µm, and the specific surface area is 2.1 m ² /g; the chemical formula of the lithium-rich manganese-based material is 0.3Li₂MnO₃·0.7Li Ni_{0.5}Mn_{0.5}O₂, D50 of the material is 7 µm, and the specific surface area is 1 m²/g. The mass percentage of the lithium-rich manganese-based material particle relative to the positive electrode active material is 40%, and the mixture is mechanically mixed at a speed of 3.5 rpm for 6 hours to obtain the positive electrode active material of the battery.

The positive electrode active material of the battery, the conductive agent, the binder and the dispersant were dispersed in N-methylpyrrolidone at a mass ratio of 96.9:0.9:2.0:0.2 to prepare a slurry, where the conductive agent was a carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 5

The lithium iron manganese phosphate material and the lithium-rich manganese-based material are added into a mixer for mixing, where the chemical formula of lithium iron manganese phosphate is Li_{1.05}Mn_{0.6}Fe_{0.4}PO₄, D50 is 0.8 µm, and the specific surface area is 21 m²/g; the chemical formula of the lithium-rich manganese-based material is 0.3Li₂MnO₃·0.7Li Ni_{0.5}Mn_{0.5}O₂, D50 of the material is 7 µm, and the specific surface area is 1 m²/g. The mass percentage of the lithium-rich manganese-based material particle relative to the positive electrode active material is 50%, and the mixture is mechanically mixed at a speed of 3.5 rpm for 6 h to obtain the positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was the carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 6

The lithium manganese iron phosphate material and the lithium-rich manganese-based material are added into a mixer for mixing, where the chemical formula of lithium manganese iron phosphate is Li_{1.05}Mn_{0.6}Fe_{0.4}PO₄, D50 is 0.8 µm, and the specific surface area is 2.1 m²/g; the chemical formula of the lithium-rich manganese-based material is 0.1Li₂MnO₃·0.9LiNi_{0.5}Mn_{0.5}O₂, D50 of the material is 7 µm, and the specific surface area is 1 m ² /g. The mass percentage of the lithium-rich manganese-based material particle relative to the positive electrode active material is 30%, and the mixture is mechanically mixed at a speed of 3.5 rpm for 6 hours to obtain a positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was the carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 7

The lithium manganese iron phosphate material and the lithium-rich manganese-based material are added into a mixer for mixing, where the chemical formula of lithium manganese iron phosphate is Li_{1.05}Mn_{0.6}Fe_{0.4}PO₄, D50 is 0.8 µm, and the specific surface area is 2.1 m²/g; the chemical formula of the lithium-rich manganese-based material is 0.2Li₂MnO₃ ·0.8LiNi_{0.5}Mn _{0.5}O₂, D50 of the material is 7 µm, and the specific surface area is 1 m²/g. The mass percentage of the lithium-rich manganese-based material particle relative to the positive electrode active material is 30%, and the mixture is mechanically mixed at a speed of 3.5 rpm for 6 hours to obtain the positive electrode active material of the battery.

The positive electrode active material of the battery, the conductive agent, the binder and the dispersant were dispersed in N-methylpyrrolidone at a mass ratio of 96.9:0.9:2.0:0.2 to prepare a slurry, where the conductive agent was a carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Example 8

The lithium manganese iron phosphate material and the lithium-rich manganese-based material are added into a mixer for mixing, where the chemical formula of lithium manganese iron phosphate is Li_{1.05}Mn_{0.6} Fe_{0.4}PO₄, D50 is 0.8 µm, and the specific surface area is 21 m²/g; the chemical formula of lithium-rich manganese-based material is 0.4Li₂MnO₃ ·0.6LiNi_{0.5}Mn_{0.5}O₂, D50 of the material is 7 µm, and the specific surface area is 1 m ² /g. The mass percentage of the lithium- rich manganese-based material particles relative to the positive electrode active material is 30%. The mixture is mechanically mixed at a speed of 3.5 rpm for 6 hours to obtain a positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was a carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g /cm³, and the obtained positive electrode sheet was combined with a separator and a negative electrode sheet to obtain a battery cell, and the battery cell was packaged, injected, and divided into different volumes to obtain a battery.

### Comparative Example 1

The lithium manganese iron phosphate was added into a mixer for mixing, where the chemical formula of lithium manganese iron phosphate is Li_{1.05}Mn _{0.6} Fe_{0.4} PO₄, D 50 is 0.8 µm, and the specific surface area is 2.1 m²/g; The mixture is mechanically mixed at a speed of 3.5 rpm for 6 hours to obtain a positive electrode active material of the battery.

The positive electrode active material of the battery, the conductive agent, the binder and the dispersant were dispersed in N-methylpyrrolidone at a mass ratio of 96.9: 0.9: 2.0: 0.2 to prepare a slurry, where the conductive agent was a carbon nanotube, the binder was polyvinylidene fluoride, the dispersant was polyvinyl pyrrolidone, and the solid content of the slurry was 60 %. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

### Comparative Example 2

The lithium iron manganese phosphate material and lithium-rich manganese-based material are added into a mixer for mixing, where the chemical formula of lithium iron manganese phosphate is Li_{1.05}Mn_{0.6}Fe_{0.4}PO₄, D 50 is 0.8 µm, and the specific surface area is 21 m²/g; the chemical formula of lithium-rich manganese-based material is 0.8Li₂ MnO₃ ·0.2LiMnO₂, D50 of the material is 7 µm, and the specific surface area is 1 m²/g. The mass percentage of the lithium-rich manganese-based material particle relative to the positive electrode active material is 30%, and the mixture is mechanically mixed at a speed of 3.5 rpm for 6 h to obtain the positive electrode active material of the battery.

The positive electrode active material of the battery, the conductive agent, the binder and the dispersant were dispersed in N-methylpyrrolidone at a mass ratio of 96.9 : 0.9 : 2.0 : 0.2 to prepare a slurry, where the conductive agent was a carbon nanotube, the binder was polyvinylidene fluoride, the dispersant was polyvinyl pyrrolidone, and the solid content of the slurry was 60%. The slurry was coated on the surface of the carbon-coated aluminum foil, and dried and pressed to obtain a positive electrode sheet with a compaction density of 2.3 g/cm³, and the obtained positive electrode sheet was combined with a separator and a negative electrode sheet to obtain a battery cell, and the battery cell was packaged, injected, and divided into different volumes to obtain a battery.

The electrical chemical performance test was performed on the batteries of Examples 1 to 8 and Comparative Examples 1 and 2. The test results are shown in Table 1.

25°C cycle times: In a 25 °C constant temperature box, 1) leaving for 30 min; 2) charging at 1C constant current and constant voltage to 4.2 V, with a cut-off current of 0.05C; 3) leaving for 30 min; 4) discharging at 1C constant current to 2.5 V; 5) repeating steps 1)-4) until the capacity retention rate reaches 80 %, and recording the cycle times.

Electrical-deduction gram capacity of EOL positive electrode sheet/Electrical-deduction gram capacity test of BOL positive electrode sheet: taking the positive electrode sheet of the EOL state battery (cycle capacity retention rate is 80%) and the positive electrode sheet of the BOL state battery (new battery) respectively, wiping off the coating layer on one side of the electrode sheet with NMP, and then assembling them into button batteries, testing their gram capacity at 25 °C 0.1C, and the ratio of the two is the test result.

**Table 1**

| [Table 1_sm_0001] | | |
|---|---|---|
| Experimental Group | 25°C Cycle times | Electrical-deduction gram capacity of EOL positive electrode sheet/Electrical-deduction gram capacity of BOL positive electrode sheet |
| Example 1 | 2700 | 97.5 % |
| Example 2 | 3100 | 97.3% |
| Example 3 | 3500 | 97.6% |
| Example 4 | 3900 | 98.1% |
| Example 5 | 4300 | 97.4% |
| Example 6 | 3300 | 96.8% |
| Example 7 | 3400 | 96.9% |
| Example 8 | 3600 | 97.4% |
| Comparative Example 1 | 2300 | 97.0% |
| Comparative Example 2 | 2500 | 92.1% |

It may be seen from Examples 1 to 8 and Comparative Example 1 that adding 10% to 50% of the lithium-rich manganese-based material to the positive electrode active material mainly comprising lithium iron manganese phosphate can significantly improve the cycle performance of the secondary battery, and at the same time has good stability performance. It may be seen from Examples 3 and 6 to 8 that with the increase of the Li₂MnO₃ content in the lithium-rich manganese-based material (that is, the increase of the y value), the cycle performance of the secondary battery increases, but its stability shows a trend of first increasing and then decreasing. It may be seen from Examples 1 to 5 and Comparative Example 2 that with the increase of lithium-rich manganese-based material in the positive electrode active material, the cycle performance of the secondary battery increases, but its stability also shows a trend of first increasing and then decreasing. When the mass ratio of the lithium-rich manganese-based material relative to the positive electrode active material is between 30%~50%, and the y value is between 0.1~0.4, the secondary battery prepared therefrom has more excellent cycle performance and stabilizing performance.

The embodiments of the present disclosure are described in detail above. Specific examples have been applied herein to illustrate the principles and implementation methods of the present disclosure. The description of the above embodiments is only used to help understand the method of the present disclosure and a core idea thereof. Meanwhile, to those skilled in the art, according to the idea of the present disclosure, there will be changes in the specific implementation methods and application scope. In summary, the content of the present specification should not be understood as a limitation on the present disclosure.

## Claims

1. A positive electrode active material, comprising lithium iron manganese phosphate particles and lithium-rich manganese-based material particles, wherein a chemical formula of the lithium-rich manganese-based material particles is yLi₂MnO₃(1-y) LiMO₂, wherein 0 < y < 0.5, and M is at least one of Ni, Co, or Mn.

2. The positive electrode active material according to claim 1, wherein a mass percentage of the lithium-rich manganese-based material particles in the positive electrode active material is 1%~50%.

3. The positive electrode active material according to claim 2, wherein the mass percentage of the lithium-rich manganese-based material particles in the positive electrode active material is 1%~10% or 10%~30% or 30%~50%.

4. The positive electrode active material according to claim 2, wherein the mass percentage of the lithium-rich manganese-based material particles in the positive electrode active material is 30%~40% or 35%~45% or 40%~50%.

5. The positive electrode active material according to claim 1, wherein 0< y ≤ 0.3.

6. The positive electrode active material according to claim 1, wherein 0.2 ≤y ≤ 0.4.

7. The positive electrode active material according to claim 1, wherein 0.3< y ≤ 0.5.

8. The positive electrode active material according to claim 1, wherein a particle size of the lithium iron manganese phosphate particles is smaller than a particle size of the lithium rich manganese based material particles.

9. The positive electrode active material according to claim 1, wherein a ratio of D50 of the lithium iron manganese phosphate particles to D50 of the lithium-rich manganese-based material particles is 0.05~0.25.

10. The positive electrode active material according to claim 1, wherein D50 of the lithium manganese iron phosphate particles is 0.4 µm~1.2 µm.

11. The positive electrode active material according to claim 1, wherein a specific surface area of the lithium manganese iron phosphate particles is 16 m²/g~26 m²/g.

12. The positive electrode active material according to claim 1, wherein D50 of the lithium-rich manganese-based material particles is 4 µm ~ 10 µm.

13. The positive electrode active material according to claim 1, wherein a specific surface area of the lithium-rich manganese-based material particles is 0.3 m²/g ~ 2 m²/g.

14. The positive electrode active material according to claim 1, wherein the positive electrode active material is composed of the lithium iron manganese phosphate particles and the lithium-rich manganese-based material particles.

15. The positive electrode active material according to claim 1, wherein a chemical formula of the lithium manganese iron phosphate material is LiₐM_{b}(PO₄) _{c}; wherein a chemical formula of M is Fe_{1-x-z}MnₓD_{z}, and as calculated by molar ratio, a/c is 0.95~1.15, b/c is 0.90~1.15, a/b is 1.01~1.10, and D is one or more doping elements selected from Mg, Ti, V, Ni, Co, Al, Nb, Y, Mo, Sr, La, Zr, and B.

16. A conductive paste comprising a conductive agent, a binder and the positive electrode active material according to claim 1.

17. The conductive paste according to claim 16, wherein the conductive paste further comprises a dispersant, and a mass percentage of the dispersant relative to the conductive paste is 0.1% ~0.3%;
and/or, the conductive paste further comprises a dispersant, the dispersant is selected from one or more of polyvinyl pyrrolidone, polyethylene glycol, polyvinyl alcohol or a polyester substance.

18. The conductive paste according to claim 16, wherein a mass percentage of the positive electrode active material relative to the conductive paste is 96.7% ~97.1%;
and/or, a mass percentage of the conductive agent relative to the conductive paste is 0.7% ~ 1.1%;
and/or, a mass percentage of the binder relative to the conductive paste is 1.8% ~2.2%.

19. The conductive paste according to claim 16, wherein the conductive agent is selected from one or more of a carbon nanotube, carbon black or graphene;
and/or, the binder is selected from one or more of polyvinylidene fluoride, polytetrafluoroethylene, polyvinyl alcohol, styrene-butadiene rubber, polyacrylonitrile, polyimide, polyacrylic acid, polyacrylate, polyolefin, sodium carboxymethyl cellulose or sodium alginate;
and/or, a compaction density of the conductive paste is 2.1 g/cm³ ~2.8 g/cm³.

20. A secondary battery, wherein the secondary battery comprises a negative electrode, a separator, an electrolyte and a positive electrode, the positive electrode comprises a current collector and a coating layer disposed on at least one side of the current collector, the coating layer comprises the positive electrode active material according to claim 1 or the conductive paste according to claim 16.
